# EUROPÄISCHE PATENTSCHRIFT

(11) **EP 4 094 353 B1**
(45) Veröffentlichungstag und Bekanntmachung des Hinweises auf die Patenterteilung: **06.08.2025**
(21) Anmeldenummer: 21701525.4
(22) Anmeldetag: 22.01.2021
(51) Int. Cl.: H02M 7/48, H02M 1/12, H02M 7/487, H02J 7/02, B60L 53/10, H02M 5/22

(54) **STROMRICHTER, LADESÄULE UND FAHRZEUG**
POWER CONVERTER, CHARGING STATION AND VEHICLE
CONVERTISSEUR DE PUISSANCE, STATION DE CHARGE ET VÉHICULE

(30) Priorität: 24.01.2020 DE 102020200872
(43) Veröffentlichungstag der Anmeldung: 30.11.2022
(73) Patentinhaber: Bucher Hydraulics AG, 6345 Neuheim (CH)
(72) Erfinder: ITTEN, Alex, 8590 Romanshorn (CH); SCHEKULIN, Dirk, 9056 Gais (CH); LÄNG, Bernhard, 8590 Romanshorn (CH); SCHNEGGENBURGER, Christof, 8594 Güttingen (CH); FÄSSLER, Benjamin, 9104 Waldstatt (CH)
(74) Vertreter: Patentanwälte Ruff, Wilhelm, Beier, Dauster & Partner mbB
(86) Internationale Anmeldenummer: PCT/EP2021/051475
(87) Internationale Veröffentlichungsnummer: WO 2021/148617

(56) Entgegenhaltungen:
- EP-A1- 2 802 054
- EP-A1- 3 496 257
- EP-A1- 3 514 940
- EP-A2- 2 660 962
- CN-A- 104 578 865
- CN-A- 109 193 559
- DE-B3- 102017 128 573
- US-A1- 2004 085 046
- US-A1- 2009 016 089
- US-A1- 2016 172 976
- US-A1- 2018 026 568
- US-A1- 2018 287 601
- US-B1- 9 520 764
- DANIEL WOJCIECHOWSKI: "High power grid interfacing AC-DC PWM converters with power conditioning capabilities", IECON 2012 - 38TH ANNUAL CONFERENCE ON IEEE INDUSTRIAL ELECTRONICS SOCIETY, IEEE, 25 October 2012 (2012-10-25), pages 5191 - 5196, XP032281313, ISBN: 978-1-4673-2419-9, DOI: 10.1109/IECON.2012.6388971
- LOPEZ IRAIDE ET AL: "Modulation Strategy for Multiphase Neutral-Point-Clamped Converters", IEEE TRANSACTIONS ON POWER ELECTRONICS, INSTITUTE OF ELECTRICAL AND ELECTRONICS ENGINEERS, USA, vol. 31, no. 2, 1 February 2016 (2016-02-01), pages 928 - 941, XP011670458, ISSN: 0885-8993, [retrieved on 20150929], DOI: 10.1109/TPEL.2015.2416911

## Beschreibung

Die Erfindung betrifft einen Stromrichter, eine Ladesäule und ein Fahrzeug.

Die US 9,520,764 B1 offenbart ein bidirektionales Energieversorgungssystem für AC- und DC-Verbraucher.

Die US 2018/0026568 A1 zeigt ein Generatorsystem mit einem Wechselrichter für Flugzeuge.

Die US 2004/0085046 A1 zeigt ein System zur Bereitstellung elektrischer Leistung für eine Turbine.

Die US 2016/0172976 A1 zeigt einen DC/DC-Wandler mit einem dreiphasigen Wechselrichter.

Die CN 104578865 A zeigt einen NPC-Umrichter vom T-Typ.

Die EP 3 514 940 A1 zeigt einen dreiphasigen Wechselrichter mit einer aktiven Steuerung eines DC-Mittenpotentials.

Die CN 109193559 A zeigt einen Stromrichter mit AC- und DC-Anschlüssen.

Die DE 10 2017 128 573 B3 zeigt eine Ladeanordnung für ein Elektrofahrzeug an einem Mittelspannungsnetz sowie entsprechende Betriebsverfahren.

Die US 2018/0287601 A1 zeigt einen Gate-Treiber einer Leistungselektronik für einen hybriden Antrieb.

Die EP 2 802 054 A1 zeigt einen Wechselrichter mit drei Wechselrichter-Brückenzweigen und einem Ausgangsfilter.

Die EP 3 496 257 A1 zeigt einen Wechselrichter mit balanciertem Mittenpotential.

Die EP 2 660 962 A2 zeigt eine Vorrichtung und ein Verfahren zum Bestimmen eines Verschleißes an Filterkondensatoren.

Die Veröffentlichung DANIEL WOJCIECHOWSKI: "High power grid interfacing AC-DC PWM Converters with power conditioning capabilities", IECON 2012 - 38TH ANNUAL CONFERENCE ON IEEE INDUSTRIAL ELECTRONICS SOCIETY, IEEE, 25. Oktober 2012 (2012-10-25), Seiten 5191-5196, XP032281313, DOI: 10.1109/IECON.2012.6388971 ISBN: 978-1-4673-2419-9 offenbart Multilevel-Umrichter in NPC-Ausführung, die LCL-Filter aufweisen, wobei ein Sternpunkt der Filterkondensatoren schwebend ausgeführt ist.

Die Veröffentlichung LOPEZ IRAIDE ET AL: "Modulation Strategy for Multiphase Neutral-Point-Clamped Converters", IEEE TRANSACTIONS ON POWER ELECTRONICS, INSTITUTE OF ELECTRICAL AND ELECTRONICS ENGINEERS, USA, Bd. 31, Nr. 2, 1. Februar 2016 (2016-02-01), Seiten 928-941, XP011670458, ISSN: 0885-8993, DOI: 10.1109/TPEL.2015.2416911 offenbart NPC-Umrichter mit mindestens vier Phasen.

Die US 2009/016089 A1 zeigt entsprechend einen NPC-Umrichter mit mindestens vier Phasen.

Der Erfindung liegt die Aufgabe zugrunde, einen Stromrichter, eine Ladesäule und ein Fahrzeug zur Verfügung zu stellen, die möglichst flexibel verwendbar sind.

Der Stromrichter weist einen ersten Anschluss, einen zweiten Anschluss, einen dritten Anschluss und einen vierten Anschluss auf, wobei an diese Anschlüsse beispielsweise externe Gleich- oder Wechselspannungsverbraucher bzw. externe Gleich- oder Wechselspannungsquellen anschließbar sind.

Der Stromrichter weist weiter, beispielsweise zwei oder drei, Energiespeicheranschlüsse auf, an die ein oder mehrere Energiespeicher und/oder ein Zwischenkreis anschließbar sind.

Der Stromrichter weist weiter genau vier Wechselrichter-Brückenzweige auf. Ein jeweiliger Wechselrichter-Brückenzweig ist aus, beispielsweise zwei oder vier, Halbleiterschaltmitteln gebildet, beispielsweise in Form von IGBTs. Ein jeweiliger Wechselrichter-Brückenzweig weist einen Mittenabgriff auf, der einem der Anschlüsse, insbesondere über Zwischenschaltung eines Filters, zugeordnet ist, insbesondere mit dem zugeordneten Anschluss direkt elektrisch leitend verbunden oder über zwischengeschaltete elektrische Bauelemente elektrisch leitend verbunden ist. Der Mittenabgriff des ersten Wechselrichter-Brückenzweigs kann beispielsweise dem ersten Anschluss zugeordnet sein, der Mittenabgriff des zweiten Wechselrichter-Brückenzweigs kann dem zweiten Anschluss zugeordnet sein, der Mittenabgriff des dritten Wechselrichter-Brückenzweigs kann dem dritten Anschluss zugeordnet sein und der Mittenabgriff des vierten Wechselrichter-Brückenzweigs kann dem vierten Anschluss zugeordnet sein. Die Wechselrichter-Brückenzweige sind derart verschaltet und ansteuerbar, dass elektrische Energie bidirektional zwischen den Energiespeicheranschlüssen und dem ersten Anschluss, dem zweiten Anschluss, dem dritten Anschluss und/oder dem vierten Anschluss übertragbar ist.

Der Stromrichter weist weiter eine Steuereinheit auf, beispielsweise in Form eines Mikroprozessors, die dazu ausgebildet ist, die Halbleiterschaltmittel der Wechselrichter-Brückenzweige Betriebsmodus-abhängig anzusteuern.

Gemäß einer Ausführungsform ist die Steuereinheit in einem ersten Betriebsmodus dazu ausgebildet, die Halbleiterschaltmittel der Wechselrichter-Brückenzweige derart anzusteuern, dass ein Anschluss der vier Anschlüsse einen Nullleiter eines Wechselspannungsnetzes bildet und die drei anderen Anschlüsse der vier Anschlüsse Phasenleiter des Wechselspannungsnetzes bilden. Die erzeugten Spannungen des Wechselspannungsnetzes sind bevorzugt jeweils sinusförmig und weisen einen geringen Oberschwingungsanteil auf. Aus Sicherheitsgründen kann eine allpolige Trennvorrichtung (Schütz) vorgesehen sein.

Im ersten Betriebsmodus kann ein Energiefluss vom elektrischen Energiespeicher in Richtung des ersten, zweiten, dritten und/oder vierten Anschlusses erfolgen, wobei aufgrund der Verwendung des Nullleiters elektrische Verbraucher mit 230 V Anschluss oder 3 X 400 V Anschluss versorgt werden können. Alternativ kann ein Energiefluss von dem ersten, zweiten, dritten und/oder vierten Anschluss in Richtung des elektrischen Energiespeichers erfolgen, so dass mittels des Stromrichters ein so genannter On Board Charger (OBC) realisiert werden kann.

Gemäß einer Ausführungsform ist die Steuereinheit in einem zweiten Betriebsmodus dazu ausgebildet, die Halbleiterschaltmittel der Wechselrichter-Brückenzweige derart anzusteuern, dass drei Anschlüsse der vier Anschlüsse ein dreiphasiges Drehstromnetz ohne Nullleiter bilden. Die zweite Betriebsart wird auch als Active Front End (AFE) Inverter bezeichnet und ermöglicht den Energieaustausch zwischen dem dreiphasigen Drehstromnetz bzw. Verbundnetz und dem Energiespeicher bzw. einem Gleichspannungszwischenkreis in beiden Richtungen.

Gemäß einer Ausführungsform ist das Wechselspannungsnetz und/oder das dreiphasige Drehstromnetz ein (Isolé Terre) IT-Netz oder ein (Terre Neutre) TN-Netz.

Gemäß einer Ausführungsform ist die Steuereinheit in einem dritten Betriebsmodus dazu ausgebildet, die Halbleiterschaltmittel der Wechselrichter-Brückenzweige derart anzusteuern, dass zwischen einem ersten Anschluss der vier Anschlüsse und einem zweiten Anschluss der vier Anschlüsse eine erste Gleichspannung ausgegeben wird und zwischen einem dritten Anschluss der vier Anschlüsse und einem vierten Anschluss der vier Anschlüsse eine zweite Gleichspannung ausgegeben wird. Die Wechselrichter-Brückenzweige arbeiten folglich als bidirektionaler, insbesondere symmetrischer, DC/DC-Wandler und ermöglichen somit den Energieaustausch zwischen zwei oder drei DC-Stromkreisen.

Gemäß einer Ausführungsform ist die Steuereinheit in einem vierten Betriebsmodus dazu ausgebildet, die Halbleiterschaltmittel der Wechselrichter-Brückenzweige derart anzusteuern, dass an einem ersten Anschluss der vier Anschlüsse und einem zweiten Anschluss der vier Anschlüsse ein erstes Potential ausgegeben wird und an einem dritten Anschluss der vier Anschlüsse und einem vierten Anschluss der vier Anschlüsse ein zweites Potential ausgegeben wird. Die Wechselrichter-Brückenzweige arbeiten folglich als DC/DC-Wandler, wobei zwei DC/DC-Wandler parallel geschaltet sind.

Gemäß einer Ausführungsform bilden die Wechselrichter-Brückenzweige einen 4-phasigen Wechselrichter, wobei die Wechselrichter-Brückenzweige aus einem positiven Zwischenkreispotential und einem negativen Zwischenkreispotential gespeist sind.

Die Wechselrichter-Brückenzweige können vier Halbbrücken in 3-Level Topologie bilden. Die Wechselrichter-Brückenzweige können beispielsweise in einer Neutral Point Clamped NPC-Topologie, einer Active Neutral Point Clamped ANPC-Topologie oder einer Mixed Voltage Neutral Point MNPC-Topologie ausgeführt sein. Hinsichtlich der grundlegenden Topologie und Funktion von 3-level Wechselrichtern sei auch auf die einschlägige Fachliteratur verwiesen, beispielsweise auf die EP 0 451 440 A2, dort insbesondere Fig. 2, die einen 3-phasigen 3-level Wechselrichter zeigt.

Gemäß einer Ausführungsform ist die Steuereinheit in dem ersten Betriebsmodus dazu ausgebildet, die Halbleiterschaltmittel der Wechselrichter-Brückenzweige derart anzusteuern, dass an dem Anschluss der vier Anschlüsse, der den Nullleiter des Wechselspannungsnetzes bildet, ein Potential im Bereich eines Mittenpotentials ausgegeben wird, wobei das Mittenpotential zwischen dem positiven Zwischenkreispotential und dem negativen Zwischenkreispotential liegt. Beispielsweise kann an dem Anschluss der vier Anschlüsse, der den Nullleiter des Wechselspannungsnetzes bildet, ein Potential ausgegeben werden, das in einem Bereich von +- 50 V um das Mittenpotential herum liegt. Insbesondere ist die Steuereinheit in dem ersten, zweiten, dritten oder dem vierten Betriebsmodus dazu ausgebildet, die Halbleiterschaltmittel der Wechselrichter-Brückenzweige derart anzusteuern, dass das Mittenpotential derart zwischen dem positiven Zwischenkreispotential und dem negativen Zwischenkreispotential liegt, dass die zulässigen Spannungsbereiche der verwendeten Bauteile eingehalten werden.

Gemäß einer Ausführungsform ist die Steuereinheit dazu ausgebildet, die Halbleiterschaltmittel der Wechselrichter-Brückenzweige derart anzusteuern, dass Spannungen, die zwischen dem ersten Anschluss, dem zweiten Anschluss, dem dritten Anschluss und/oder dem vierten Anschluss ausgegeben werden, symmetrisch zum Mittenpotential sind. Die Steuereinheit kann in dem dritten Betriebsmodus dazu ausgebildet sein, die Halbleiterschaltmittel der Wechselrichter-Brückenzweige derart anzusteuern, dass die erste Gleichspannung und die zweite Gleichspannung symmetrisch zum Mittenpotential erzeugt werden, d.h. das Mittenpotential in der Mitte der beiden Gleichspannungen liegt.

Der Stromrichter weist ein Filter auf, insbesondere ein Filter mit mehreren Filterzweigen, das bzw. dessen Filterzweige zwischen die Mittenabgriffe der jeweiligen Wechselrichter-Brückenzweige und den ersten Anschluss, den zweiten Anschluss, den dritten Anschluss bzw. den vierten Anschluss eingeschleift ist. Das Filter kann beispielsweise ein 4-fach LCL-Filter sein.

Das Filter weist beispielsweise vier Filterkondensatoren auf, die jeweils mit einem ihrer Anschlüsse mit dem Mittenpotential verbunden sind.

Der Stromrichter weist pro Wechselrichter-Brückenzweig einen Ausgangsstrom-Stromsensor auf, wobei ein jeweiliger Ausgangsstrom-Stromsensor mit der Steuereinheit zum Datenaustausch gekoppelt ist. Ein jeweiliger Ausgangsstrom-Stromsensor ist dazu ausgebildet, einen zugehörigen Ausgangsstrom des Stromrichters zu messen. Die Steuereinheit kann dazu ausgebildet sein, basierend auf den gemessenen Ausgangsströmen eine Stromregelung und/oder eine Spannungsregelung durchzuführen.

Der Stromrichter weist pro Filterkondensator einen Filterstrom-Stromsensor auf, wobei ein jeweiliger Filterstrom-Stromsensor mit der Steuereinheit zum Datenaustausch gekoppelt ist. Ein jeweiliger Filterstrom-Stromsensor ist dazu ausgebildet, einen zugehörigen Filterstrom in den ihm zugehörigen Filterkondensator zu messen. Die Steuereinheit ist dazu ausgebildet, basierend auf den gemessenen Filterströmen eine Stromregelung und/oder eine Spannungsregelung durchzuführen.

Die Steuereinheit ist dazu ausgebildet, basierend auf den gemessenen Ausgangsströmen und den gemessenen Filterströmen eine Strombelastung der Wechselrichter-Brückenzweige zu ermitteln und basierend darauf die Wechselrichter-Brückenzweige anzusteuern, beispielsweise um die Strombelastung zu symmetrieren.

Die erfindungsgemäße Ladesäule weist einen, insbesondere elektrischen, Energiespeicher und einen oben beschriebenen Stromrichter auf, wobei der Energiespeicher an die Energiespeicheranschlüsse des Stromrichters angeschlossen ist. Der Energiespeicher kann beispielsweise eine Batterie, eine Brennstoffzelle, ein oder mehrere Doppelschichtkondensatoren (usw.) sein. Der Stromrichter ist insbesondere dazu ausgebildet, an seinem ersten Anschluss, seinem zweiten Anschluss, seinem dritten Anschluss und/oder seinem vierten Anschluss geeignete Gleich- und/oder Wechselspannungen zum Laden eines Elektrofahrzeugs zu erzeugen.

Das erfindungsgemäße Fahrzeug weist einen, insbesondere elektrischen, Energiespeicher und einen oben beschriebenen Stromrichter auf, wobei der Energiespeicher an die Energiespeicheranschlüsse des Stromrichters angeschlossen ist. Der Energiespeicher kann beispielsweise eine Batterie, eine Brennstoffzelle, ein oder mehrere Doppelschichtkondensatoren (usw.) sein. Der Stromrichter ist insbesondere dazu ausgebildet, über seinen ersten Anschluss, seinen zweiten Anschluss, seinen dritten Anschluss und/oder seinen vierten Anschluss elektrische Energie zum Laden des Energiespeichers aufzunehmen. Hierzu kann an den ersten Anschluss, den zweiten Anschluss, den dritten Anschluss und/oder den vierten Anschluss eine geeignete Gleich- oder Wechselspanungsquelle angeschlossen sein, die externe elektrische Energie zum Laden des Energiespeichers bereitstellt.

Die Erfindung wird nachfolgend detailliert unter Bezugnahme auf die Zeichnungen beschrieben. Hierbei zeigt:
- Fig. 1: einen erfindungsgemäßen Stromrichter in einem ersten Betriebsmodus,
- Fig. 2: den erfindungsgemäßen Stromrichter in einem zweiten Betriebsmodus,
- Fig. 3: den erfindungsgemäßen Stromrichter in einem dritten Betriebsmodus,
- Fig. 4: Spannungslagen von Spannungen, die in dem dritten Betriebsmodus von dem erfindungsgemäßen Stromrichter erzeugt werden,
- Fig. 5: den erfindungsgemäßen Stromrichter in einem vierten Betriebsmodus,
- Fig. 6: ein Schaltbild eines prinzipiellen Aufbaus des erfindungsgemäßen Stromrichters,
- Fig. 7: ein Schaltbild eines Wechselrichter-Brückenzweigs des in Fig. 6 gezeigten Stromrichters gemäß einer ersten Ausführungsform,
- Fig. 8: ein Schaltbild eines Wechselrichter-Brückenzweigs des in Fig. 6 gezeigten Stromrichters gemäß einer weiteren Ausführungsform,
- Fig. 9: ein Schaltbild eines Wechselrichter-Brückenzweigs des in Fig. 6 gezeigten Stromrichters gemäß einer weiteren Ausführungsform,
- Fig. 10: hoch schematisch eine Ladesäule mit einem erfindungsgemäßen Stromrichter,
- Fig. 11: hoch schematisch ein Fahrzeug mit einem erfindungsgemäßen Stromrichter,
- Fig. 12: ein Schaltbild eines prinzipiellen Aufbaus eines nicht erfindungsgemäßen Stromrichters,
- Fig. 13: ein Schaltbild eines prinzipiellen Aufbaus eines nicht erfindungsgemäßen Stromrichters, und
- Fig. 14: ein Schaltbild eines prinzipiellen Aufbaus eines nicht erfindungsgemäßen Stromrichters,

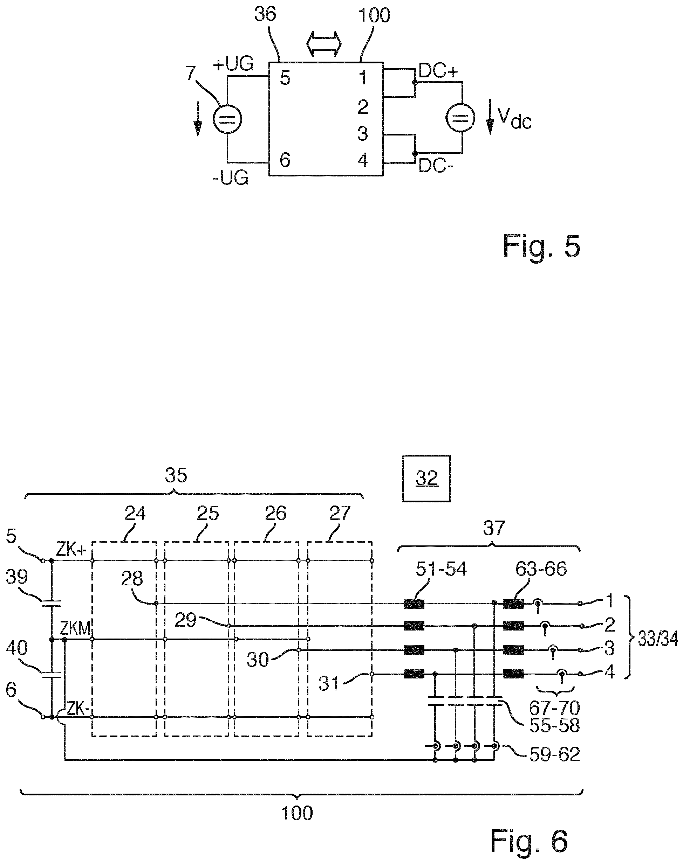

Ein prinzipieller innerer Aufbau des Stromrichters 100 wird nachfolgend zunächst unter Bezugnahme auf Fig. 6 beschrieben.

Der Stromrichter 100 weist einen ersten Anschluss 1, einen zweiten Anschluss 2, einen dritten Anschluss 3 und einen vierten Anschluss 4 auf, an den verschiedene externe Komponenten in verschiedenen Betriebsmodi anschließbar sind. Hierauf wird nachfolgend noch detailliert eingegangen.

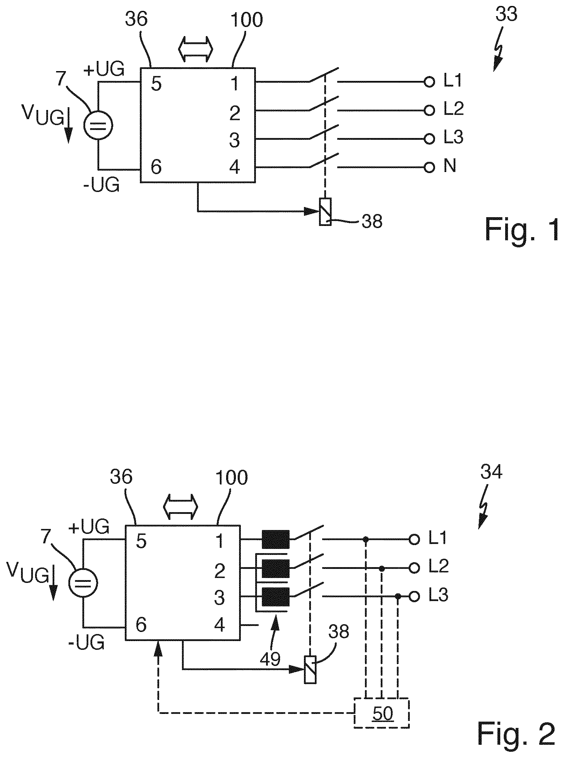

Der Stromrichter 100 weist einen ersten Energiespeicheranschluss 5 und einen zweiten Energiespeicheranschluss 6 auf, an die ein Energiespeicher 7, beispielsweise eine Batterie, anschließbar ist, siehe hierzu auch beispielsweise Fig. 1. Am ersten Energiespeicheranschluss 5 steht ein positives Zwischenkreispotential ZK+ an und am zweiten Energiespeicheranschluss 6 steht ein negatives Zwischenkreispotential ZK- an. Das positive Zwischenkreispotential ZK+ kann einem positiven Energiespeicherpotential UG+ entsprechen und das negative Zwischenkreispotential ZK- kann einem negativen Energiespeicherpotential UG- entsprechen, siehe beispielsweise Fig. 1.

Der Stromrichter 100 weist weiter zwei Kondensatoren 39 und 40 auf, die in Reihe zwischen die Energiespeicheranschlüsse 5 und 6 eingeschleift sind. An einem Verbindungsknoten der beiden Kondensatoren 39 und 40 steht ein Mittenpotential ZKM an.

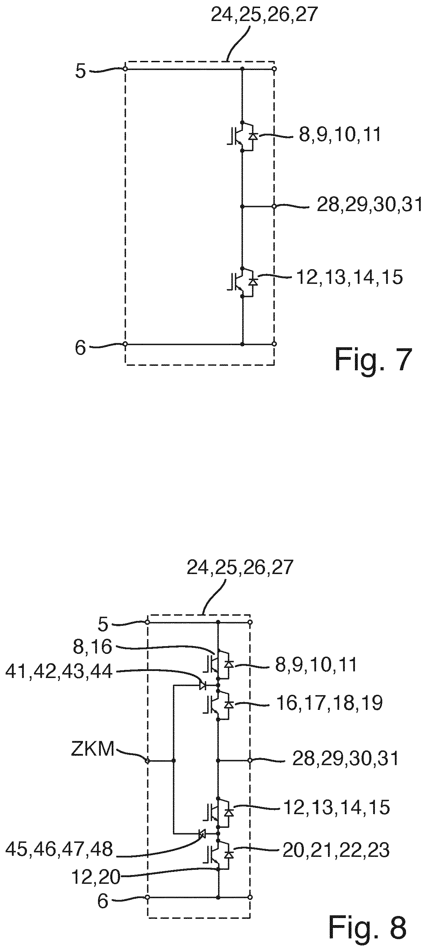

Der Stromrichter 100 weist weiter genau vier Wechselrichter-Brückenzweige 24, 25, 26 und 27 auf, deren innerer Aufbau mit Bezug zu den Figuren 7, 8 und 9 detailliert beschrieben wird.

Die Wechselrichter-Brückenzweige 24, 25, 26, 27 weisen einen Mittenabgriff 28, 29, 30 bzw. 31 auf, wobei ein Mittenabgriff 28, 29, 30 und 31 einem Anschluss 1, 2, 3 bzw. 4 unter Zwischenschaltung eines optionalen 4-fach LCL-Sinus-Filters 37 zugeordnet ist.

Das LCL-Filter 37 weist für einen zugehörigen Wechselrichter-Brückenzweig 24, 25, 26 bzw. 27 eine erste Spule 51, 52, 53 bzw. 54, einen Filterkondensator 55, 56, 57 bzw. 58 und eine zweite Spule 63, 64, 65 bzw. 66 in der dargestellten LCL-Topologie auf.

Weiter ist in einem Filterzweig ein Filterstrom-Stromsensor 59, 60, 61 bzw. 62 angeordnet, der einen Filterstrom in den zugehörigen Filterkondensator 59, 60, 61 bzw. 62 misst.

Weiter ist in einem Filterzweig ein Ausgangsstrom-Stromsensor 67, 68, 69 bzw. 70 angeordnet, der einen Ausgangsstrom in dem zugehörigen Filterzweig misst.

Die Bauelemente des Filters 37 können vollständig oder teilweise wassergekühlt sein.

Die Filterkondensatoren 55, 56, 57, 58 sind jeweils mit einem ihrer Anschlüsse über die Filterstrom-Stromsensoren 59, 60, 61 bzw. 62 mit dem Mittenpotential ZKM verbunden.

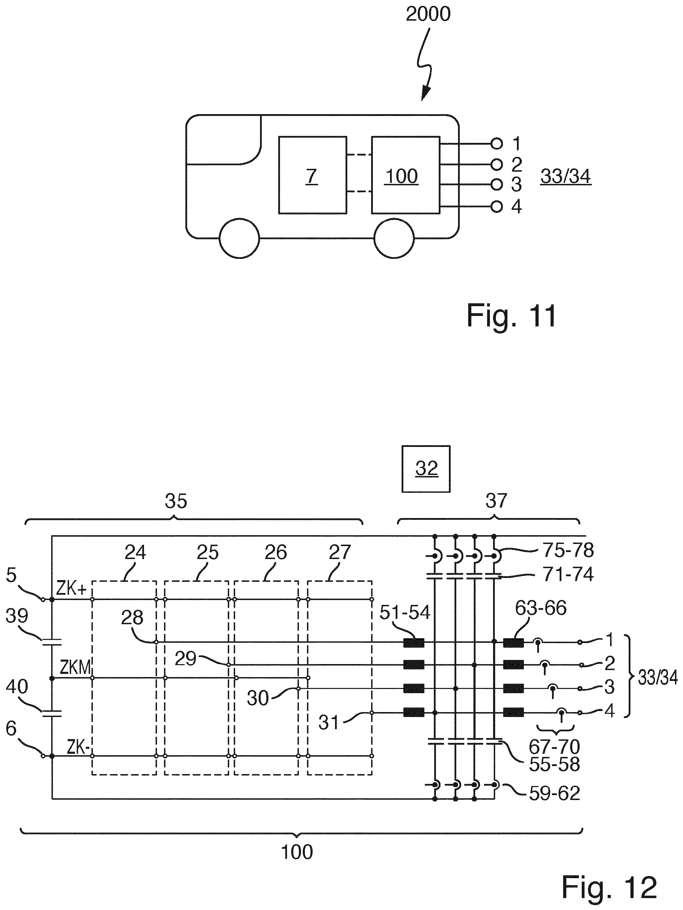

Wie in Fig. 12 gezeigt, können alternativ die Filterkondensatoren 55, 56, 57, 58 jeweils mit einem ihrer Anschlüsse über die Filterstrom-Stromsensoren 59, 60, 61 bzw. 62 mit dem zweiten Energiespeicheranschluss 6 verbunden sein und Filterkondensatoren 71, 72, 73, 74 können jeweils mit einem ihrer Anschlüsse über Filterstrom-Stromsensoren 75, 76, 77 bzw. 78 mit dem ersten Energiespeicheranschluss 5 verbunden sein.

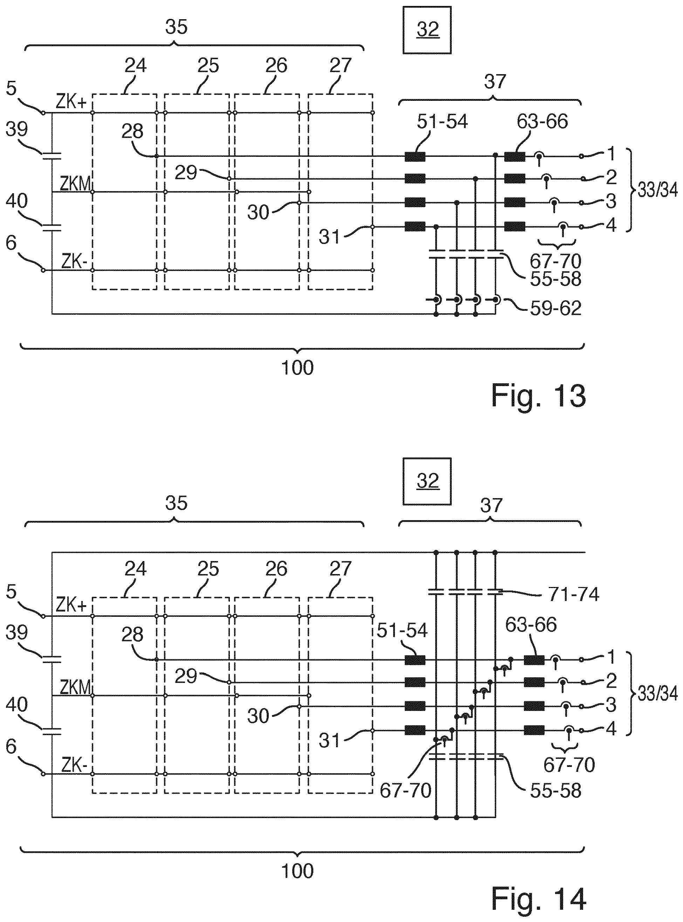

Wie in Fig. 13 gezeigt, können weiter alternativ die Filterkondensatoren 55, 56, 57, 58 jeweils mit einem ihrer Anschlüsse über die Filterstrom-Stromsensoren 59, 60, 61 bzw. 62 mit dem zweiten Energiespeicheranschluss 6 verbunden sein. In einer nicht dargestellten Alternative können die Filterkondensatoren 55, 56, 57, 58 jeweils mit einem ihrer Anschlüsse über die Filterstrom-Stromsensoren 59, 60, 61 bzw. 62 mit dem ersten Energiespeicheranschluss 5 verbunden sein

Wie in Fig. 14 gezeigt, können weiter alternativ die Filterkondensatoren 55, 56, 57, 58 jeweils mit einem ihrer Anschlüsse mit dem zweiten Energiespeicheranschluss 6 verbunden sein und die Filterkondensatoren 71, 72, 73, 74 können jeweils mit einem ihrer Anschlüsse mit dem ersten Energiespeicheranschluss 5 verbunden sein. Ein Verbindungsknoten der Filterkondensatoren 55, 56, 57, 58 mit den zugehörigen Filterkondensatoren 71, 72, 73, 74 ist für diesen Fall über die zugehörigen Filterstrom-Stromsensoren 59, 60, 61 bzw. 62 mit einem Verbindungsknoten der Spulen 51, 52, 53, 54 mit den zugehörigen Spulen 63, 64, 65, 66 verbunden. Der Stromrichter 100 weist weiter eine Steuereinheit 32 auf, die dazu ausgebildet ist, Halbleiterschaltmittel (siehe die Figuren 7 bis 9) der Wechselrichter-Brückenzweige 24, 25, 26, 27 derart anzusteuern, dass elektrische Energie bidirektional zwischen den Energiespeicheranschlüssen 5, 6 und dem ersten Anschluss 1, dem zweiten Anschluss 2, dem dritten Anschluss 3 und/oder dem vierten Anschluss übertragbar ist. Die Steuereinheit 32 ist mit den Stromsensoren 59 bis 62, 67 bis 70 und gegebenenfalls 75 bis 78 zum Datenaustausch gekoppelt. Basierend auf den gemessenen Strömen führt die Steuereinheit 32 eine Stromregelung und/oder eine Spannungsregelung durch.

Fig. 7 zeigt ein Schaltbild eines Wechselrichter-Brückenzweigs 24, 25, 26 bzw. 27 des in Fig. 6 gezeigten Stromrichters 100 gemäß einer ersten Ausführungsform. Der Wechselrichter-Brückenzweig 24 weist zwei in Reihe zwischen die Energiespeicheranschlüsse 5 und 6 eingeschleifte Halbleiterschaltmittel 8 und 12 auf.

Die Wechselrichter-Brückenzweige 25 bis 27 sind entsprechend aufgebaut und weisen Halbleiterschaltmittel 9 und 13; 10 und 14; bzw. 11 und 15 auf. Den Halbleiterschaltmitteln 8 bis 15 ist jeweils eine Freilaufdiode parallel geschaltet.

Ein Verbindungsknoten des Halbleiterschaltmittels 8 und des Halbleiterschaltmittels 12 bildet den Mittenabgriff 28 und ist mit einem zugehörigen Filterzweig des Filters 37 verbunden.

Entsprechend bildet ein Verbindungsknoten des Halbleiterschaltmittels 9 und des Halbleiterschaltmittels 13 den Mittenabgriff 29 und ist mit einem zugehörigen Filterzweig des Filters 37 verbunden.

Entsprechend bildet ein Verbindungsknoten des Halbleiterschaltmittels 10 und des Halbleiterschaltmittels 14 den Mittenabgriff 30 und ist mit einem zugehörigen Filterzweig des Filters 37 verbunden.

Entsprechend bildet ein Verbindungsknoten des Halbleiterschaltmittels 11 und des Halbleiterschaltmittels 15 den Mittenabgriff 31 und ist mit einem zugehörigen Filterzweig des Filters 37 verbunden.

Fig. 8 zeigt ein Schaltbild eines 3-level Wechselrichter-Brückenzweigs 24, 25, 26 bzw. 27 des in Fig. 6 gezeigten Stromrichters 100 gemäß einer weiteren Ausführungsform.

Der Wechselrichter-Brückenzweig 24 weist vier in Reihe zwischen die Energiespeicheranschlüsse 5 und 6 eingeschleifte Halbleiterschaltmittel 8, 16, 12, 20 auf. Der Wechselrichter-Brückenzweig 24 weist weiter eine erste Diode 41 auf, deren Anode mit dem Verbindungsknoten der beiden Kondensatoren 39 und 40 verbunden ist und deren Kathode mit einem Verbindungsknoten des Halbleiterschaltmittels 8 und des Halbleiterschaltmittels 16 verbunden ist. Der Wechselrichter-Brückenzweig 24 weist weiter eine zweite Diode 45 auf, deren Kathode mit dem Verbindungsknoten der beiden Kondensatoren 39 und 40 verbunden ist und deren Anode mit einem Verbindungsknoten des Halbleiterschaltmittels 12 und des Halbleiterschaltmittels 20 verbunden ist. Der Mittenabgriff 28 in Form des Verbindungsknotens des Halbleiterschaltmittels 16 und des Halbleiterschaltmittels 12 ist mit einem zugehörigen Filterzweig des Filters 37 verbunden.

Der Wechselrichter-Brückenzweig 25 weist entsprechend vier in Reihe zwischen die Energiespeicheranschlüsse 5 und 6 eingeschleifte Halbleiterschaltmittel 9, 17, 13, 21 auf. Der Wechselrichter-Brückenzweig 25 weist weiter eine erste Diode 42 auf, deren Anode mit dem Verbindungsknoten der beiden Kondensatoren 39 und 40 verbunden ist und deren Kathode mit einem Verbindungsknoten des Halbleiterschaltmittels 9 und des Halbleiterschaltmittels 17 verbunden ist. Der Wechselrichter-Brückenzweig 25 weist weiter eine zweite Diode 46 auf, deren Kathode mit dem Verbindungsknoten der beiden Kondensatoren 39 und 40 verbunden ist und deren Anode mit einem Verbindungsknoten des Halbleiterschaltmittels 13 und des Halbleiterschaltmittels 21 verbunden ist. Der Mittenabgriff 29 in Form des Verbindungsknotens des Halbleiterschaltmittels 17 und des Halbleiterschaltmittels 13 ist mit einem zugehörigen Filterzweig des Filters 37 verbunden.

Der Wechselrichter-Brückenzweig 26 weist entsprechend vier in Reihe zwischen die Energiespeicheranschlüsse 5 und 6 eingeschleifte Halbleiterschaltmittel 10, 18, 14, 22 auf. Der Wechselrichter-Brückenzweig 26 weist weiter eine erste Diode 43 auf, deren Anode mit dem Verbindungsknoten der beiden Kondensatoren 39 und 40 verbunden ist und deren Kathode mit einem Verbindungsknoten des Halbleiterschaltmittels 10 und des Halbleiterschaltmittels 18 verbunden ist. Der Wechselrichter-Brückenzweig 26 weist weiter eine zweite Diode 47 auf, deren Kathode mit dem Verbindungsknoten der beiden Kondensatoren 39 und 40 verbunden ist und deren Anode mit einem Verbindungsknoten des Halbleiterschaltmittels 14 und des Halbleiterschaltmittels 22 verbunden ist. Der Mittenabgriff 30 in Form des Verbindungsknotens des Halbleiterschaltmittels 18 und des Halbleiterschaltmittels 14 ist mit einem zugehörigen Filterzweig des Filters 37 verbunden.

Der Wechselrichter-Brückenzweig 27 weist entsprechend vier in Reihe zwischen die Energiespeicheranschlüsse 5 und 6 eingeschleifte Halbleiterschaltmittel 11, 19, 15, 23 auf. Der Wechselrichter-Brückenzweig 27 weist weiter eine erste Diode 44 auf, deren Anode mit dem Verbindungsknoten der beiden Kondensatoren 39 und 40 verbunden ist und deren Kathode mit einem Verbindungsknoten des Halbleiterschaltmittels 11 und des Halbleiterschaltmittels 19 verbunden ist. Der Wechselrichter-Brückenzweig 27 weist weiter eine zweite Diode 48 auf, deren Kathode mit dem Verbindungsknoten der beiden Kondensatoren 39 und 40 verbunden ist und deren Anode mit einem Verbindungsknoten des Halbleiterschaltmittels 15 und des Halbleiterschaltmittels 23 verbunden ist. Der Mittenabgriff 31 in Form des Verbindungsknotens des Halbleiterschaltmittels 19 und des Halbleiterschaltmittels 15 ist mit einem zugehörigen Filterzweig des Filters 37 verbunden.

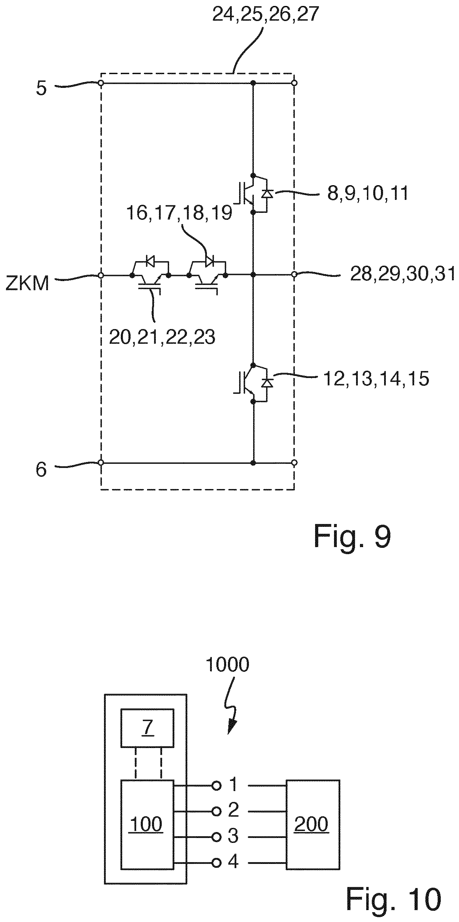

Fig. 9 zeigt ein Schaltbild eines 3-level Wechselrichter-Brückenzweigs 24, 25, 26 bzw. 27 des in Fig. 6 gezeigten Stromrichters 100 gemäß einer weiteren Ausführungsform.

Der Wechselrichter-Brückenzweig 24 weist zwei in Reihe zwischen die Energiespeicheranschlüsse 5 und 6 eingeschleifte Halbleiterschaltmittel 8 und 12 auf. Ein Verbindungsknoten des Halbleiterschaltmittels 8 und des Halbleiterschaltmittels 12 bildet den Mittenabgriff 28 und ist mit einem zugehörigen Filterzweig des Filters 37 verbunden. Halbleiterschaltmittel 16 und 20 sind in Reihe zwischen das Mittenpotential ZKM und den Mittenabgriff 28 eingeschleift. Dem Halbleiterschaltmittel 16 ist eine Freilaufdiode parallel geschaltet, wobei die Kathode der Freilaufdiode mit dem Mittenabgriff 28 verbunden ist. Dem Halbleiterschaltmittel 20 ist eine Freilaufdiode parallel geschaltet, wobei die Kathode der Freilaufdiode mit dem Mittenpotential ZKM beaufschlagt ist.

Der Wechselrichter-Brückenzweig 25 weist entsprechend zwei in Reihe zwischen die Energiespeicheranschlüsse 5 und 6 eingeschleifte Halbleiterschaltmittel 9 und 13 auf. Ein Verbindungsknoten des Halbleiterschaltmittels 9 und des Halbleiterschaltmittels 13 bildet den Mittenabgriff 29 und ist mit einem zugehörigen Filterzweig des Filters 37 verbunden. Halbleiterschaltmittel 17 und 21 sind in Reihe zwischen das Mittenpotential ZKM und den Mittenabgriff 29 eingeschleift. Dem Halbleiterschaltmittel 17 ist eine Freilaufdiode parallel geschaltet, wobei die Kathode der Freilaufdiode mit dem Mittenabgriff 29 verbunden ist. Dem Halbleiterschaltmittel 21 ist eine Freilaufdiode parallel geschaltet, wobei die Kathode der Freilaufdiode mit dem Mittenpotential ZKM beaufschlagt ist.

Der Wechselrichter-Brückenzweig 26 weist entsprechend zwei in Reihe zwischen die Energiespeicheranschlüsse 5 und 6 eingeschleifte Halbleiterschaltmittel 10 und 14 auf. Ein Verbindungsknoten des Halbleiterschaltmittels 10 und des Halbleiterschaltmittels 14 bildet den Mittenabgriff 30 und ist mit einem zugehörigen Filterzweig des Filters 37 verbunden. Halbleiterschaltmittel 18 und 22 sind in Reihe zwischen das Mittenpotential ZKM und den Mittenabgriff 30 eingeschleift. Dem Halbleiterschaltmittel 18 ist eine Freilaufdiode parallel geschaltet, wobei die Kathode der Freilaufdiode mit dem Mittenabgriff 30 verbunden ist. Dem Halbleiterschaltmittel 22 ist eine Freilaufdiode parallel geschaltet, wobei die Kathode der Freilaufdiode mit dem Mittenpotential ZKM beaufschlagt ist.

Der Wechselrichter-Brückenzweig 27 weist entsprechend zwei in Reihe zwischen die Energiespeicheranschlüsse 5 und 6 eingeschleifte Halbleiterschaltmittel 11 und 15 auf. Ein Verbindungsknoten des Halbleiterschaltmittels 11 und des Halbleiterschaltmittels 15 bildet den Mittenabgriff 31 und ist mit einem zugehörigen Filterzweig des Filters 37 verbunden. Halbleiterschaltmittel 19 und 23 sind in Reihe zwischen das Mittenpotential ZKM und den Mittenabgriff 31 eingeschleift. Dem Halbleiterschaltmittel 19 ist eine Freilaufdiode parallel geschaltet, wobei die Kathode der Freilaufdiode mit dem Mittenabgriff 31 verbunden ist. Dem Halbleiterschaltmittel 23 ist eine Freilaufdiode parallel geschaltet, wobei die Kathode der Freilaufdiode mit dem Mittenpotential ZKM beaufschlagt ist.

Fig. 1 zeigt den erfindungsgemäßen Stromrichter 100 in einem ersten Betriebsmodus, der auch als electric Power Take Off (ePTO) oder "Steckdose" bezeichnet wird. Im ersten Betriebsmodus steuert die Steuereinheit 32 die Halbleiterschaltmittel 8-23 der Wechselrichter-Brückenzweige 24, 25, 26, 27 (beispielsweise wie in Fig. 8 dargestellt) derart an, dass der Anschluss 4 einen Nullleiter N eines IT- oder TN-Wechselspannungsnetzes 33 bildet, an dem in etwa das Mittenpotential ZKM ausgegeben wird, und die drei anderen Anschlüsse 1, 2, 3 Phasenleiter L1, L2, L3 des Wechselspannungsnetzes 33 bilden. Ein optionales allpoliges Schütz 38 dient zur Netztrennung.

Der Stromrichter 1 weist ein schematisch dargestelltes Gehäuse 36 auf.

Fig. 2 zeigt den erfindungsgemäßen Stromrichter 100 in einem zweiten Betriebsmodus. Im zweiten Betriebsmodus steuert die Steuereinheit 32 die Halbleiterschaltmittel 8-23 der Wechselrichter-Brückenzweige 24, 25, 26, 27 (beispielsweise wie in Fig. 8 dargestellt) derart an, dass drei Anschlüsse 1, 2, 3 ein dreiphasiges Drehstromnetz 34 ohne Nullleiter bilden. Optional können ein allpoliges Schütz 38, eine Spannungsmesseinrichtung 50 zur Messung von Phasenspannungen und eine dreiphasige Netzdrossel 49 vorgesehen sein.

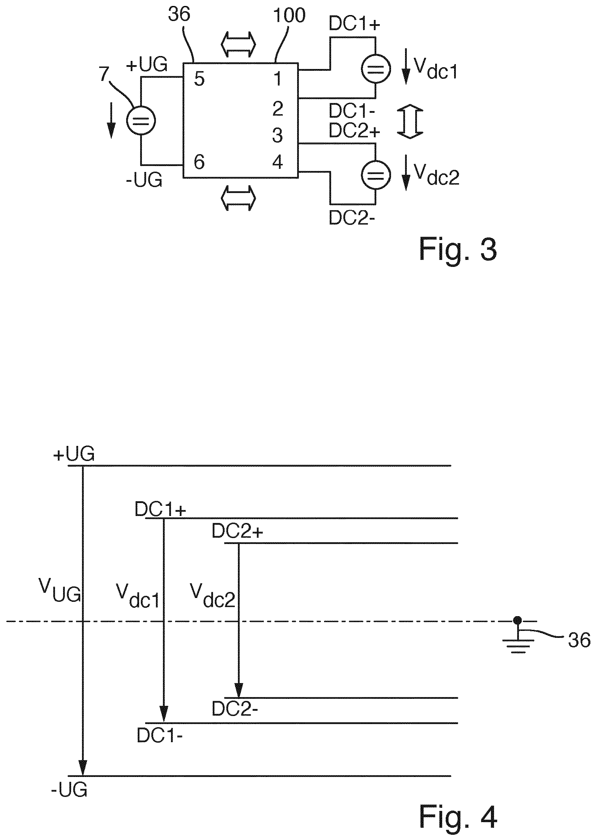

Fig. 3 zeigt den erfindungsgemäßen Stromrichter 100 in einem dritten Betriebsmodus. Im dritten Betriebsmodus steuert die Steuereinheit 32 die Halbleiterschaltmittel 8-23 der Wechselrichter-Brückenzweige 24, 25, 26, 27 (beispielsweise wie in Fig. 8 dargestellt) derart an, dass zwischen dem ersten Anschluss 1 und dem zweiten Anschluss 2 eine erste Gleichspannung Vdc1 ausgegeben wird und zwischen dem dritten Anschluss 3 und dem vierten Anschluss 4 eine zweite Gleichspannung Vdc2 ausgegeben wird.

Wie aus Fig. 4 hervorgeht, werden die erste Gleichspannung Vdc1 und die zweite Gleichspannung Vdc2 symmetrisch zum Mittenpotential ZKM erzeugt.

Fig. 5 zeigt den erfindungsgemäßen Stromrichter 100 in einem vierten Betriebsmodus. Im vierten Betriebsmodus steuert die Steuereinheit 32 die Halbleiterschaltmittel 8-23 der Wechselrichter-Brückenzweige 24, 25, 26, 27 (beispielsweise wie in Fig. 8 dargestellt) derart an, dass am ersten Anschluss 1 und am zweiten Anschluss 2 ein erstes Potential DC+ ausgegeben wird und am dritten Anschluss 3 und am vierten Anschluss 4 ein zweites Potential DC- ausgegeben wird.

Fig. 10 zeigt hoch schematisch eine Ladesäule 1000 mit einem Energiespeicher 7 und dem Stromrichter 100, wobei der Energiespeicher 7 an die Energiespeicheranschlüsse 5, 6 des Stromrichters 100 angeschlossen ist. Die Anschlüsse 1 bis 4 des Stromrichters 100 sind nach außen geführt, so dass dort beispielsweise zu ladende Energiespeicher eines Elektrofahrzeugs 200 angeschlossen und geladen werden können.

Fig. 11 zeigt hoch schematisch ein Fahrzeug 2000 mit einem Energiespeicher 7 und dem Stromrichter 100, wobei der Energiespeicher 7 an die Energiespeicheranschlüsse 5, 6 des Stromrichters 100 angeschlossen ist. Die Anschlüsse 1 bis 4 des Stromrichters 100 sind nach außen geführt, so dass dort beispielsweise zu ladende Energiespeicher angeschlossen werden können und/oder externe Ladesysteme zum Laden des Energiespeichers 7 angeschlossen werden können.

Die Erweiterung des Stromrichters von 3 auf erfindungsgemäß 4 Ausgangsphasen bzw. Wechselrichter-Brückenzweige ermöglicht es, verschiedene Betriebsmodi, beispielsweise electric Power Take Off (ePTO), On-Board Charger (OBC) und DC/DC-Wandler, mit nur einem einzigen Typ von Stromrichter zu realisieren und damit Entwicklungskosten und Fertigungskosten zu minimieren. Auch die Logistikkosten und Lagerkosten sind niedriger, wenn nur eine Gerätevariante hergestellt werden muss.

Ein Auswählen des gewünschten Betriebsmodus kann beispielsweise rein softwarebasiert erfolgen, beispielsweise durch eine Benutzereinstellung am Stromrichter 100.

Aus dem erfindungsgemäßen Ansatz mit vier Wechselrichter-Brückenzweigen bzw. 4 Phasen ergeben sich folgende Vorteile.

Im ersten Betriebsmodus mit Nullleiter mit der gleichen Stromtragfähigkeit wie die Phasen L1, L2 und L3 werden beliebige Schieflasten kontrollierbar und es können gleichzeitig 230 V und 3 x 400 V Lasten versorgt werden. Im OBC Anwendungsfall kann aufgrund des angeschlossenen Nullleiters ein Erdleiterstrom reduziert werden, wodurch das Laden mit Verwendung eines Fehlerstromschutzschalters (FI) ermöglicht wird. Durch geeignete Modulation des Nullleiters mittels geeigneter Ansteuerung der Wechselrichter-Brückenzweige 24, 25, 26, 27 können gegenläufige Nullleiterströme erzeugt und damit Fehlerströme auf dem Erdleiter kompensiert werden.

Durch die Erweiterung auf 4 Ausgangsphasen im dritten bzw. vierten Betriebsmodus können beim DC/DC-Wandler alle 4 Phasen verwendet werden und damit gleichzeitig 2 verschiedene Ausgangsspannung erzeugt oder durch die Parallelschaltung der doppelte Ausgangsstrom erreicht werden.

## Patentansprüche

1. Stromrichter (100), aufweisend:
- einen ersten Anschluss (1), einen zweiten Anschluss (2), einen dritten Anschluss (3) und einen vierten Anschluss (4),
- Energiespeicheranschlüsse (5, 6), an die ein Energiespeicher (7) anschließbar ist,
- vier aus Halbleiterschaltmitteln (8-23) gebildete Wechselrichter-Brückenzweige (24, 25, 26, 27),
- wobei die Wechselrichter-Brückenzweige (24, 25, 26, 27) jeweils einen Mittenabgriff (28, 29, 30, 31) aufweisen, wobei ein jeweiliger Mittenabgriff (28, 29, 30, 31) einem der Anschlüsse (1, 2, 3, 4) zugeordnet ist, und
- wobei die Wechselrichter-Brückenzweige (24, 25, 26, 27) derart verschaltet und ansteuerbar sind, dass elektrische Energie bidirektional zwischen den Energiespeicheranschlüssen (5, 6) und dem ersten Anschluss (1), dem zweiten Anschluss (2), dem dritten Anschluss (3) und/oder dem vierten Anschluss (4) übertragbar ist,
- eine Steuereinheit (32), die dazu ausgebildet ist, die Halbleiterschaltmittel (8-23) der Wechselrichter-Brückenzweige (24, 25, 26, 27) anzusteuern,
- ein Filter (37), das zwischen die Mittenabgriffe (28, 29, 30, 31) der jeweiligen Wechselrichter-Brückenzweige (24, 25, 26, 27) und den ersten Anschluss (1), den zweiten Anschluss (2), den dritten Anschluss (3) und den vierten Anschluss (4) eingeschleift ist, und
- Ausgangsstrom-Stromsensoren (67, 68, 69, 70), die mit der Steuereinheit (32) zum Datenaustausch gekoppelt sind und die dazu ausgebildet sind, Ausgangsströme des Stromrichters (100) zu messen,
**dadurch gekennzeichnet, dass**
- das Filter (37) Filterkondensatoren (55, 56, 57, 58) aufweist, die jeweils mit einem ihrer Anschlüsse mit einem Mittenpotential (ZKM) verbunden sind, und
- der Stromrichter (100) Filterstrom-Stromsensoren (59, 60, 61, 62, 75, 76, 77, 78) aufweist, die mit der Steuereinheit (32) zum Datenaustausch gekoppelt sind und die dazu ausgebildet sind, Filterströme in die Filterkondensatoren (55, 56, 57, 58, 71, 72, 73, 74) zu messen, wobei die Steuereinheit (32) dazu ausgebildet ist, basierend auf den gemessenen Filterströmen eine Stromregelung und/oder eine Spannungsregelung durchzuführen, wobei die Steuereinheit (32) dazu ausgebildet ist, basierend auf den gemessenen Ausgangsströmen und den gemessenen Filterströmen eine Strombelastung der Wechselrichter-Brückenzweige (24, 25, 26, 27) zu ermitteln und basierend darauf die Wechselrichter-Brückenzweige (24, 25, 26, 27) anzusteuern.

2. Stromrichter (100) nach Anspruch 1, **dadurch gekennzeichnet, dass**
- die Steuereinheit (32) in einem ersten Betriebsmodus dazu ausgebildet ist, die Halbleiterschaltmittel (8-23) der Wechselrichter-Brückenzweige (24, 25, 26, 27) derart anzusteuern, dass ein Anschluss (4) der vier Anschlüsse (1, 2, 3, 4) einen Nullleiter (N) eines Wechselspannungsnetzes (33) bildet und die drei anderen Anschlüsse (1, 2, 3) der vier Anschlüsse (1, 2, 3, 4) Phasenleiter (L1, L2, L3) des Wechselspannungsnetzes (33) bilden.

3. Stromrichter (100) nach einem der vorhergehenden Ansprüche, **dadurch gekennzeichnet, dass**
- die Steuereinheit (32) in einem zweiten Betriebsmodus dazu ausgebildet ist, die Halbleiterschaltmittel (8-23) der Wechselrichter-Brückenzweige (24, 25, 26, 27) derart anzusteuern, dass drei Anschlüsse (1, 2, 3) der vier Anschlüsse (1, 2, 3, 4) ein dreiphasiges Drehstromnetz (34) ohne Nullleiter bilden.

4. Stromrichter (100) nach Anspruch 2 oder 3, **dadurch gekennzeichnet, dass**
- das Wechselspannungsnetz (33) und/oder das dreiphasige Drehstromnetz (34) ein (Isolé Terre) IT-Netz oder ein (Terre Neutre) TN-Netz ist.

5. Stromrichter (100) nach einem der vorhergehenden Ansprüche, **dadurch gekennzeichnet, dass**
- die Steuereinheit (32) in einem dritten Betriebsmodus dazu ausgebildet ist, die Halbleiterschaltmittel (8-23) der Wechselrichter-Brückenzweige (24, 25, 26, 27) derart anzusteuern, dass zwischen einem ersten Anschluss (1) der vier Anschlüsse (1, 2, 3, 4) und einem zweiten Anschluss (2) der vier Anschlüsse (1, 2, 3, 4) eine erste Gleichspannung (Vdc1) ausgegeben wird und zwischen einem dritten Anschluss (3) der vier Anschlüsse (1, 2, 3, 4) und einem vierten Anschluss (4) der vier Anschlüsse (1, 2, 3, 4) eine zweite Gleichspannung (Vdc2) ausgegeben wird.

6. Stromrichter (100) nach einem der vorhergehenden Ansprüche, **dadurch gekennzeichnet, dass**
- die Steuereinheit (32) in einem vierten Betriebsmodus dazu ausgebildet ist, die Halbleiterschaltmittel (8-23) der Wechselrichter-Brückenzweige (24, 25, 26, 27) derart anzusteuern, dass an einem ersten Anschluss (1) der vier Anschlüsse (1, 2, 3, 4) und an einem zweiten Anschluss (2) der vier Anschlüsse (1, 2, 3, 4) ein erstes Potential (DC+) ausgegeben wird und an einem dritten Anschluss (3) der vier Anschlüsse (1, 2, 3, 4) und an einem vierten Anschluss (4) der vier Anschlüsse (1, 2, 3, 4) ein zweites Potential (DC-) ausgegeben wird.

7. Stromrichter (100) nach einem der vorhergehenden Ansprüche, **dadurch gekennzeichnet, dass**
- die Wechselrichter-Brückenzweige (24, 25, 26, 27) einen 4-phasigen Wechselrichter (35) bilden, wobei die Wechselrichter-Brückenzweige (24, 25, 26, 27) aus einem positiven Zwischenkreispotential (ZK+) und einem negativen Zwischenkreispotential (ZK-) gespeist sind.

8. Stromrichter (100) nach einem der vorhergehenden Ansprüche, **dadurch gekennzeichnet, dass**
- die Steuereinheit (32) in dem ersten Betriebsmodus dazu ausgebildet ist, die Halbleiterschaltmittel (8-23) der Wechselrichter-Brückenzweige (24, 25, 26, 27) derart anzusteuern, dass an dem Anschluss (4) der vier Anschlüsse (1, 2, 3, 4), der den Nullleiter des Wechselspannungsnetzes (33) bildet, ein Potential im Bereich eines Mittenpotentials (ZKM) ausgegeben wird, wobei das Mittenpotential (ZKM) zwischen dem positiven Zwischenkreispotential (ZK+) und dem negativen Zwischenkreispotential (ZK-) liegt.

9. Stromrichter (100) nach Anspruch 8, **dadurch gekennzeichnet, dass**
- die Steuereinheit (32) dazu ausgebildet ist, die Halbleiterschaltmittel (8-23) der Wechselrichter-Brückenzweige (24, 25, 26, 27) derart anzusteuern, dass Spannungen, die zwischen dem ersten Anschluss (1), dem zweiten Anschluss (2), dem dritten Anschluss (3) und/oder dem vierten Anschluss (4) ausgegeben werden, symmetrisch zum Mittenpotential (ZKM) sind, wobei die Steuereinheit (32) insbesondere in dem dritten Betriebsmodus dazu ausgebildet ist, die Halbleiterschaltmittel (8-23) der Wechselrichter-Brückenzweige (24, 25, 26, 27) derart anzusteuern, dass die erste Gleichspannung (Vdc1) und die zweite Gleichspannung (Vdc2) symmetrisch zum Mittenpotential (ZKM) erzeugt werden.

10. Ladesäule (1000), aufweisend:
- einen Energiespeicher (7) und
- mindestens einen Stromrichter (100) nach einem der vorhergehenden Ansprüche, wobei der Energiespeicher (7) an die Energiespeicheranschlüsse (5, 6) des Stromrichters (100) angeschlossen ist, wobei der Stromrichter (100) insbesondere dazu ausgebildet ist, an seinem ersten Anschluss (1), seinem zweiten Anschluss (2), seinem dritten Anschluss (3) und/oder seinem vierten Anschluss (4) geeignete Spannungen zum Laden eines Elektrofahrzeugs (200) zu erzeugen.

11. Fahrzeug (2000), aufweisend:
- einen Energiespeicher (7) und
- einen Stromrichter (100) nach einem der vorhergehenden Ansprüche, wobei der Energiespeicher (7) an die Energiespeicheranschlüsse (5, 6) des Stromrichters (100) angeschlossen ist, wobei der Stromrichter (100) insbesondere dazu ausgebildet ist, über seinen ersten Anschluss (1), seinen zweiten Anschluss (2), seinen dritten Anschluss (3) und/oder seinen vierten Anschluss (4) elektrische Energie zum Laden des Energiespeichers (7) aufzunehmen.

## Claims

1. Power converter (100) having:
- a first connection (1), a second connection (2), a third connection (3) and a fourth connection (4),
- energy store connections (5, 6), to which an energy store (7) can be connected,
- four inverter bridge branches (24, 25, 26, 27) formed from semiconductor switching means (8-23),
- wherein the inverter bridge branches (24, 25, 26, 27) each have a centre tap (28, 29, 30, 31), wherein a respective centre tap (28, 29, 30, 31) is assigned to one of the connections (1, 2, 3, 4), and
- wherein the inverter bridge branches (24, 25, 26, 27) are connected and can be controlled in such a manner that electrical energy can be transmitted bidirectionally between the energy store connections (5, 6) and the first connection (1), the second connection (2), the third connection (3) and/or the fourth connection (4),
- a control unit (32) which is designed to control the semiconductor switching means (8-23) of the inverter bridge branches (24, 25, 26, 27),
- a filter (37) which is looped in between the centre taps (28, 29, 30, 31) of the respective inverter bridge branches (24, 25, 26, 27) and the first connection (1), the second connection (2), the third connection (3) and the fourth connection (4), and
- output current sensors (67, 68, 69, 70) which are coupled to the control unit (32) for the purpose of interchanging data and are designed to measure output currents of the power converter (100),
**characterized in that**
- the filter (37) has filter capacitors (55, 56, 57, 58) which are each connected to a centre potential (ZKM) by one of their connections, and
- the power converter (100) has filter current sensors (59, 60, 61, 62, 75, 76, 77, 78) which are coupled to the control unit (32) for the purpose of interchanging data and are designed to measure filter currents in the filter capacitors (55, 56, 57, 58, 71, 72, 73, 74), wherein the control unit (32) is designed to carry out current control and/or voltage control on the basis of the measured filter currents, wherein the control unit (32) is designed to determine a current load of the inverter bridge branches (24, 25, 26, 27) on the basis of the measured output currents and the measured filter currents and to control the inverter bridge branches (24, 25, 26, 27) on the basis thereof.

2. Power converter (100) according to Claim 1, **characterized in that**
- the control unit (32) is designed, in a first operating mode, to control the semiconductor switching means (8-23) of the inverter bridge branches (24, 25, 26, 27) in such a manner that one connection (4) of the four connections (1, 2, 3, 4) forms a neutral conductor (N) of an AC voltage grid (33) and the three other connections (1, 2, 3) of the four connections (1, 2, 3, 4) form phase conductors (L1, L2, L3) of the AC voltage grid (33).

3. Power converter (100) according to either of the preceding claims, **characterized in that**
- the control unit (32) is designed, in a second operating mode, to control the semiconductor switching means (8-23) of the inverter bridge branches (24, 25, 26, 27) in such a manner that three connections (1, 2, 3) of the four connections (1, 2, 3, 4) form a three-phase grid (34) without a neutral conductor.

4. Power converter (100) according to Claim 2 or 3, **characterized in that**
- the AC voltage grid (33) and/or the three-phase grid (34) is/are an (Isolé Terre) IT grid or a (Terre Neutre) TN grid.

5. Power converter (100) according to one of the preceding claims, **characterized in that**
- the control unit (32) is designed, in a third operating mode, to control the semiconductor switching means (8-23) of the inverter bridge branches (24, 25, 26, 27) in such a manner that a first DC voltage (Vdc1) is output between a first connection (1) of the four connections (1, 2, 3, 4) and a second connection (2) of the four connections (1, 2, 3, 4) and a second DC voltage (Vdc2) is output between a third connection (3) of the four connections (1, 2, 3, 4) and a fourth connection (4) of the four connections (1, 2, 3, 4).

6. Power converter (100) according to one of the preceding claims, **characterized in that**
- the control unit (32) is designed, in a fourth operating mode, to control the semiconductor switching means (8-23) of the inverter bridge branches (24, 25, 26, 27) in such a manner that a first potential (DC+) is output at a first connection (1) of the four connections (1, 2, 3, 4) and at a second connection (2) of the four connections (1, 2, 3, 4) and a second potential (DC-) is output at a third connection (3) of the four connections (1, 2, 3, 4) and at a fourth connection (4) of the four connections (1, 2, 3, 4).

7. Power converter (100) according to one of the preceding claims, **characterized in that**
- the inverter bridge branches (24, 25, 26, 27) form a four-phase inverter (35), wherein the inverter bridge branches (24, 25, 26, 27) are fed from a positive intermediate circuit potential (ZK+) and a negative intermediate circuit potential (ZK-).

8. Power converter (100) according to one of the preceding claims, **characterized in that**
- the control unit (32) is designed, in the first operating mode, to control the semiconductor switching means (8-23) of the inverter bridge branches (24, 25, 26, 27) in such a manner that a potential in the region of a centre potential (ZKM) is output at that connection (4) of the four connections (1, 2, 3, 4) which forms the neutral conductor of the AC voltage grid (33), wherein the centre potential (ZKM) is between the positive intermediate circuit potential (ZK+) and the negative intermediate circuit potential (ZK-).

9. Power converter (100) according to Claim 8, **characterized in that**
- the control unit (32) is designed to control the semiconductor switching means (8-23) of the inverter bridge branches (24, 25, 26, 27) in such a manner that voltages which are output between the first connection (1), the second connection (2), the third connection (3) and/or the fourth connection (4) are symmetrical with respect to the centre potential (ZKM), wherein the control unit (32) is designed, in particular in the third operating mode, to control the semiconductor switching means (8-23) of the inverter bridge branches (24, 25, 26, 27) in such a manner that the first DC voltage (Vdc1) and the second DC voltage (Vdc2) are generated in a symmetrical manner with respect to the centre potential (ZKM) .

10. Charging post (1000) having:
- an energy store (7) and
- at least one power converter (100) according to one of the preceding claims, wherein the energy store (7) is connected to the energy store connections (5, 6) of the power converter (100), wherein the power converter (100) is designed, in particular, to generate suitable voltages for charging an electric vehicle (200) at its first connection (1), its second connection (2), its third connection (3) and/or its fourth connection (4).

11. Vehicle (2000) having:
- an energy store (7) and
- a power converter (100) according to one of the preceding claims, wherein the energy store (7) is connected to the energy store connections (5, 6) of the power converter (100), wherein the power converter (100) is designed, in particular, to receive electrical energy for charging the energy store (7) via its first connection (1), its second connection (2), its third connection (3) and/or its fourth connection (4).

## Revendications

1. Convertisseur de puissance (100), comprenant :
- une première borne (1), une deuxième borne (2), une troisième borne (3) et une quatrième borne (4),
- des bornes d'accumulateur d'énergie (5, 6), auxquelles un accumulateur d'énergie (7) peut être raccordé,
- quatre branches de pont d'onduleur (24, 25, 26, 27) formées à partir d'éléments de commutation à semi-conducteur (8-23),
- les branches de pont d'onduleur (24, 25, 26, 27) ayant chacune une prise centrale (28, 29, 30, 31), chaque prise centrale (28, 29, 30, 31) étant associée à l'une des bornes (1, 2, 3, 4), et
- les branches de pont d'onduleur (24, 25, 26, 27) étant interconnectées et commandables de telle sorte que de l'énergie électrique puisse être transférée de manière bidirectionnelle entre les bornes d'accumulateur d'énergie (5, 6) et la première borne (1), la deuxième borne (2), la troisième borne (3) et/ou la quatrième borne (4),
- une unité de commande (32) qui est conçue pour commander les éléments de commutation à semi-conducteur (8-23) des branches de pont d'onduleur (24, 25, 26, 27),
- un filtre (37) qui est inséré entre les prises centrales (28, 29, 30, 31) des branches de pont d'onduleur (24, 25, 26, 27) respectives et la première borne (1), la deuxième borne (2), la troisième borne (3) et la quatrième borne (4), et
- des capteurs de courant de sortie (67, 68, 69, 70) qui sont couplés à l'unité de commande (32) pour l'échange de données et qui sont conçus pour mesurer les courants de sortie du convertisseur de puissance (100), **caractérisé en ce que**
- le filtre (37) comporte des condensateurs de filtre (55, 56, 57, 58) qui sont respectivement connectés par l'une de leurs bornes à un potentiel central (ZKM), et
- le convertisseur de puissance (100) comporte des capteurs de courant de filtre (59, 60, 61, 62, 75, 76, 77, 78) qui sont couplés à l'unité de commande (32) pour l'échange de données et qui sont conçus pour mesurer des courants de filtre dans les condensateurs de filtre (55, 56, 57, 58, 71, 72, 73, 74), l'unité de commande (32) étant conçue pour effectuer une régulation de courant et/ou une régulation de tension basée sur les courants de filtre mesurés, l'unité de commande (32) étant conçue pour déterminer une charge de courant des branches de pont d'onduleur (24, 25, 26, 27) sur la base des courants de sortie mesurés et des courants de filtre mesurés et pour commander les branches de pont d'onduleur (24, 25, 26, 27) sur cette base.

2. Convertisseur de puissance (100) selon la revendication 1, **caractérisé en ce que**
- l'unité de commande (32), dans un premier mode de fonctionnement, est conçue pour commander les éléments de commutation à semi-conducteur (8-23) des branches de pont d'onduleur (24, 25, 26, 27) de telle sorte qu'une borne (4) des quatre bornes (1, 2, 3, 4) forme un conducteur neutre (N) d'un réseau à tension alternative (33) et que les trois autres bornes (1, 2, 3) des quatre bornes (1, 2, 3, 4) forment des conducteurs de phase (L1, L2, L3) du réseau à tension alternative (33).

3. Convertisseur de puissance (100) selon l'une quelconque des revendications précédentes, **caractérisé en ce que**
- l'unité de commande (32), dans un deuxième mode de fonctionnement, est conçue pour commander les éléments de commutation à semi-conducteur (8-23) des branches de pont d'onduleur (24, 25, 26, 27) de telle sorte que trois bornes (1, 2, 3) des quatre bornes (1, 2, 3, 4) forment un réseau triphasé (34) sans conducteur neutre.

4. Convertisseur de puissance (100) selon la revendication 2 ou 3, **caractérisé en ce que**
- le réseau à tension alternative (33) et/ou le réseau triphasé (34) est un réseau IT (Isolé Terre) ou un réseau TN (Terre Neutre).

5. Convertisseur de puissance (100) selon l'une quelconque des revendications précédentes, **caractérisé en ce que**
- l'unité de commande (32), dans un troisième mode de fonctionnement, est conçue pour commander les éléments de commutation à semi-conducteur (8-23) des branches de pont d'onduleur (24, 25, 26, 27) de telle sorte qu'une première tension continue (Vdc1) soit délivrée entre une première borne (1) des quatre bornes (1, 2, 3, 4) et une deuxième borne (2) des quatre bornes (1, 2, 3, 4), et qu'une deuxième tension continue (Vdc2) soit délivrée entre une troisième borne (3) des quatre bornes (1, 2, 3, 4) et une quatrième borne (4) des quatre bornes (1, 2, 3, 4).

6. Convertisseur de puissance (100) selon l'une quelconque des revendications précédentes, **caractérisé en ce que**
- l'unité de commande (32), dans un quatrième mode de fonctionnement, est conçue pour commander les éléments de commutation à semi-conducteur (8-23) des branches de pont d'onduleur (24, 25, 26, 27) de telle sorte qu'un premier potentiel (DC+) soit délivré à une première borne (1) des quatre bornes (1, 2, 3, 4) et à une deuxième borne (2) des quatre bornes (1, 2, 3, 4), et qu'un deuxième potentiel (DC-) soit délivré à une troisième borne (3) des quatre bornes (1, 2, 3, 4) et à une quatrième borne (4) des quatre bornes (1, 2, 3, 4).

7. Convertisseur de puissance (100) selon l'une quelconque des revendications précédentes, **caractérisé en ce que**
- les branches de pont d'onduleur (24, 25, 26, 27) forment un onduleur quadriphasé (35), les branches de pont d'onduleur (24, 25, 26, 27) étant alimentées à partir d'un potentiel de circuit intermédiaire positif (ZK+) et d'un potentiel de circuit intermédiaire négatif (ZK-).

8. Convertisseur de puissance (100) selon l'une quelconque des revendications précédentes, **caractérisé en ce que**
- l'unité de commande (32), dans le premier mode de fonctionnement, est conçue pour commander les éléments de commutation à semi-conducteur (8-23) des branches de pont d'onduleur (24, 25, 26, 27) de telle sorte qu'un potentiel dans la plage d'un potentiel central (ZKM) soit délivré à la borne (4) des quatre bornes (1, 2, 3, 4) qui forme le conducteur neutre du réseau à tension alternative (33), le potentiel central (ZKM) se situant entre le potentiel de circuit intermédiaire positif (ZK+) et le potentiel de circuit intermédiaire négatif (ZK-).

9. Convertisseur de puissance (100) selon la revendication 8, **caractérisé en ce que**
- l'unité de commande (32) est conçue pour commander les éléments de commutation à semi-conducteur (8-23) des branches de pont d'onduleur (24, 25, 26, 27) de telle sorte que les tensions délivrées entre la première borne (1), la deuxième borne (2), la troisième borne (3) et/ou la quatrième borne (4) soient symétriques par rapport au potentiel central (ZKM), l'unité de commande (32), en particulier dans le troisième mode de fonctionnement, étant conçue pour commander les éléments de commutation à semi-conducteur (8-23) des branches de pont d'onduleur (24, 25, 26, 27) de telle sorte que la première tension continue (Vdc1) et la deuxième tension continue (Vdc2) soient générées symétriquement par rapport au potentiel central (ZKM).

10. Borne de recharge (1000), comprenant :
- un accumulateur d'énergie (7) et
- au moins un convertisseur de puissance (100) selon l'une quelconque des revendications précédentes, l'accumulateur d'énergie (7) étant raccordé aux bornes d'accumulateur d'énergie (5, 6) du convertisseur de puissance (100), le convertisseur de puissance (100) étant en particulier conçu pour générer des tensions appropriées pour charger un véhicule électrique (200) à sa première borne (1), sa deuxième borne (2), sa troisième borne (3) et/ou sa quatrième borne (4).

11. Véhicule (2000), comprenant :
- un accumulateur d'énergie (7) et
- un convertisseur de puissance (100) selon l'une quelconque des revendications précédentes, l'accumulateur d'énergie (7) étant raccordé aux bornes d'accumulateur d'énergie (5, 6) du convertisseur de puissance (100), le convertisseur de puissance (100) étant en particulier conçu pour recevoir de l'énergie électrique pour charger l'accumulateur d'énergie (7) par l'intermédiaire de sa première borne (1), de sa deuxième borne (2), de sa troisième borne (3) et/ou de sa quatrième borne (4).
